(19) Europäisches Patentamt
European Patent Office
Office européen des brevets

(11) **EP 2 060 815 B1**

(12) **FASCICULE DE BREVET EUROPEEN**

(45) Date de publication et mention
de la délivrance du brevet:
**20.01.2010 Bulletin 2010/03**

(51) Int Cl.:
***F16D 23/04*** *(2006.01)*

(21) Numéro de dépôt: **08168936.6**

(22) Date de dépôt: **12.11.2008**

(54) **Dispositif de couplage par cône de friction pour boîte de vitesses**

Vorrichtung zur Kupplung mittels Reibkegeln für Getriebe

Friction cone coupling device for a gearbox

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **15.11.2007 FR 0759072**

(43) Date de publication de la demande:
**20.05.2009 Bulletin 2009/21**

(73) Titulaire: **Peugeot Citroën Automobiles SA
78140 Vélizy-Villacoublay (FR)**

(72) Inventeur: **Lelasseux, Xavier
92150 Suresnes (FR)**

(56) Documents cités:
**EP-A- 1 199 489     JP-A- 8 200 396
US-A- 5 085 303     US-A- 5 638 930**

## Description

La présente invention est relative aux dispositifs de couplage par friction multi cônes, notamment ceux permettant la synchronisation et/ou la transmission de couple dans une boîte de vitesses mécanique de véhicule automobile.

De tels dispositifs sont très utilisés, notamment pour la synchronisation des boîtes de vitesses, qui consiste en l'égalisation par frottement de la vitesse d'un arbre de la boîte avec celle d'un pignon fou tournant autour de celui-ci, lors d'un changement de rapport de vitesse.

Le principal dispositif connu est le synchroniseur de type multicônes, comportant trois anneaux coniques, respectivement un anneau supérieur, intermédiaire et inférieur, ces anneaux étant de diamètre décroissant dans cet ordre de manière à pouvoir être arrangés les uns à l'intérieur des autres, de manière concentrique. Les anneaux supérieur et inférieur sont liés en rotation à un moyeu solidaire de l'arbre tournant, tandis que l'anneau intermédiaire est lié en rotation au pignon fou. Les anneaux intermédiaire et inférieur comportent tous deux une surface de frottement interne et une surface de frottement externe. L'anneau supérieur ne comporte lui qu'une surface de frottement interne. Le pignon fou est pourvu d'un flasque comportant une surface de frottement conique destinée à coopérer avec la surface de frottement interne de l'anneau inférieur.

La mise en service d'un tel dispositif de couplage est réalisée par déplacement axial des anneaux et la mise en contact des surfaces coniques en vis-à-vis, à l'aide d'un manchon en liaison glissière avec le moyeu. On génère ainsi un couple de friction qui est transmis du moyeu au pignon fou via les surfaces de frottement coniques de l'ensemble des anneaux.

De manière connue, la liaison entre, d'une part, les anneaux coniques supérieur et inférieur et le moyeu, et, d'autre part, l'anneau intermédiaire et le pignon fou, est réalisée au moyen de « tocs » d'entraînement, ou crans, présents sur l'ensemble des anneaux coniques, et coopérant avec des cavités du moyeu dans le premier cas et du pignon fou dans le second cas.

Il est connu, notamment par le document FR 2846 061, de prévoir à la périphérie de chaque anneau conique des tocs à flancs parallèles à l'axe du cône, ces tocs coopérant avec des cavités, également à flancs parallèles du moyeu, ou du pignon fou selon le type d'anneau. Lorsque le dispositif est sollicité, un couple est donc transmis du moyeu vers les anneaux supérieur et inférieur via des forces de direction tangentielle exercées au point de contact entre les flancs des cavités du moyeu et les flancs des tocs d'entraînement. De même, l'anneau conique intermédiaire transmet un couple au pignon fou, via des forces de direction tangentielle exercées au point de contact entre les flancs des tocs de cet anneau et les flancs des cavités présentes dans le pignon fou.

Les forces tangentielles ainsi générées sont cependant à l'origine d'une perte de rendement du dispositif : en effet, pour que le dispositif transmettre un couple par friction, il est nécessaire de mettre en contact les surfaces coniques en vis-à-vis. Cette mise en contact est réalisée sous l'action d'un effort axial exercé par le manchon et, plus encore, le couple transmis par le dispositif est directement lié à l'effort axial exercé. Or, lorsqu'on applique cet effort axial, les forces tangentielles décrites plus haut génèrent, aux points de contact entre les différents tocs et les cavités associées, des forces de frottement de direction axiale et de sens opposé à l'effort axial de commande (exercé par le manchon), du fait du déplacement relatif des tocs par rapport au moyeu ou au pignon fou. Ainsi, les frottements dus aux tocs réduisent l'effort axial de commande initial, induisant une perte de rendement. De plus, les forces de frottement générées étant proportionnelles aux forces tangentielles (le coefficient pondérateur étant le coefficient de frottement entre les surfaces des tocs et des cavités), on comprend donc que plus le couple transmis par le moyeu est important, plus les forces tangentielles et donc les forces de frottement aux points de contact sont grandes, plus la perte de rendement est importante. Le document JP 08200396 décrit un coupleur comportant des anneaux coniques.

Il est également connu un coupleur conique dit « auto-assisté », reposant sur un principe de fonctionnement identique, mais pourvu de tocs inclinés, ou rampes. Ces rampes inclinées génèrent une poussée axiale induite qui s'ajoute à la force exercée par l'actionneur, cette force supplémentaire permettant notamment d'utiliser des actionneurs de plus faible capacité. Cependant, cette assistance crée des difficultés supplémentaires, et notamment celle de contrôler finement le couple transmis par le coupleur.

Le but de l'invention est donc de fournir un dispositif de couplage de friction dans lequel les tocs d'entraînement sont conçus pour éliminer cette perte de rendement, en minimisant ou supprimant la composante axiale de la force de frottement générée par les tocs, mais sans toutefois générer d'auto-assistance.

Ainsi, l'invention concerne un dispositif de couplage par friction d'un pignon fou avec un arbre de boîte de vitesses comportant un moyeu solidaire en rotation de cet arbre, un manchon libre de glisser axialement par rapport au moyeu, des anneaux coniques disposés de manière concentrique entre le moyeu pignon fou, les anneaux coniques étant alternativement liés en rotation au moyeu et au pignon fou au moyen de tocs d'entraînement, coopérant avec des cavités, complémentaires présentes sur le moyeu et le pignon fou, les anneaux coniques, étant aptes à être mis en contact sous l'action d'un effort axial de commande exercé par le manchon, de façon à transmettre par friction au pignon fou un couple de rotation reçu du moyeu, le dispositif étant caractérisé en ce que le flanc de chaque toc, en contact avec le flanc en vis-à-vis de la cavité lors de la transmission de couple est incliné d'un angle a non nul par rapport à la direction de l'axe, cet angle a étant tel que la tangente de cet angle est strictement inférieure à la valeur du coefficient de frottement entre les surfaces des flancs du toc, et de la cavité,

Dans une réalisation, les cavités, coopérant avec les tocs, présente un profil complémentaire, leurs flancs en contact avec les tocs, étant également inclinés d'un angle sensiblement égal à $\alpha$.

Dans une réalisation, les tocs, présentent un profil symétrique par rapport à l'axe, notamment un profil trapézoïdal.

Dans une réalisation, les tocs liés en rotation au pignon fou présente un profil évasé.

Dans une réalisation, les tocs, présentent deux flancs parallèles, inclinés respectivement d'un angle $\alpha$ et d'un angle - $\alpha$.

Dans une réalisation, la valeur de $\alpha$ est telle que sa tangente est proche de $\mu$.

Dans une réalisation, les tocs, sont disposés à la périphérie des anneaux coniques, chaque anneau comportant plusieurs tocs,

Dans une réalisation, le dispositif comporte au total au moins cinq anneaux coniques.

Un exemple de réalisation de l'invention est décrit ci-après de manière non limitative en relation avec les figures parmi lesquelles :

- la figure 1 est un schéma d'un dispositif selon l'invention,
- les figures 2a et 2b montrent des tocs selon l'invention pour des anneaux coniques coopérant respectivement avec un pignon fou et avec un moyeu,
- les figures 3a et 3b montrent une variante de réalisation des tocs des figures 2a et 2b,
- la figure 4 montre les forces exercées au point de contact entre les flancs d'un toc et d'une cavité associée lorsque le dispositif transmet un couple,
- La figure 5 montre la variation de la force axiale induite par les tocs en fonction de la valeur de l'inclinaison des tocs.

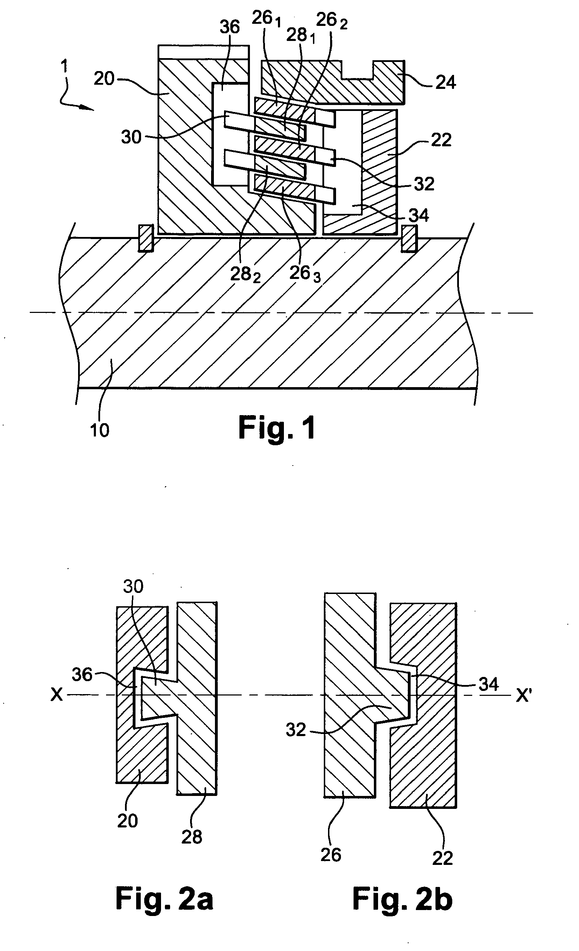

La figure 1 montre un dispositif de transmission de couple par friction d'architecture classique : le dispositif comprend un moyeu 22 solidaire d'un arbre 10, par exemple un arbre de boîte de vitesses mécanique. L'arbre 10 porte également un pignon fou 20, en vis-à-vis du moyeu 22. Entre le moyeu 22 et le pignon fou 20 est disposé un empilement d'anneaux coniques $26_1$, $26_2$, $26_3$, $28_1$, $28_2$ tels que décrits plus haut. Ces anneaux coniques sont alternativement liés en rotation au moyeu 22 et au pignon 20 au moyen de tocs d'entraînement 30, 32 coopérant avec des cavités 34, 36 pratiquées dans le moyeu et le pignon fou.

Le dispositif décrit à la figure 1 comporte au total cinq anneaux coniques, soit trois anneaux $26_1$, $26_2$, $26_3$ liés au moyeu 22, un anneau supérieur, un anneau intermédiaire et un anneau inférieur. Le pignon fou est lié quant à lui à deux anneaux intermédiaires $28_1$, $28_2$ et comporte une surface conique apte à coopérer avec une surface conique interne de l'anneau inférieur $26_3$. Enfin, un manchon 24 est en liaison glissière ou pivot glissant avec le moyeu 24 et est apte à venir exercer un effort axial sur l'anneau conique supérieur $26_1$ afin de mettre en contact les surfaces des anneaux coniques en vis-à-vis, générant ainsi un couple de friction.

Les anneaux coniques, comme expliqué plus haut, sont tous pourvus de tocs d'entraînement afin d'être lié au moyeu 22 ou au pignon fou 20 selon le type d'anneau. Les figures 2a et 2b montrent la forme des tocs selon l'invention respectivement pour un anneau conique lié au pignon fou 20 et un anneau conique lié au moyeu 22.

La figure 2b montre un anneau conique 26 muni d'un toc d'entraînement 32 coopérant avec une cavité 34 du moyeu 22. L'axe XX' représente l'axe de l'arbre portant le dispositif de couplage. On voit donc que le toc 32 comporte des flancs qui ne sont pas parallèles à l'axe XX', mais inclinés par rapport à celui-ci. Le toc 32 est donc sensiblement de profil trapézoïdal, et la cavité 34 présente un profil complémentaire. Selon l'invention, l'angle $\alpha$ que forme le flanc du toc 32 avec l'axe XX' est tel que tan $\alpha$ est inférieur ou égal au coefficient $\mu$ de frottement entre le flanc de la cavité 34 et le flanc du toc 32.

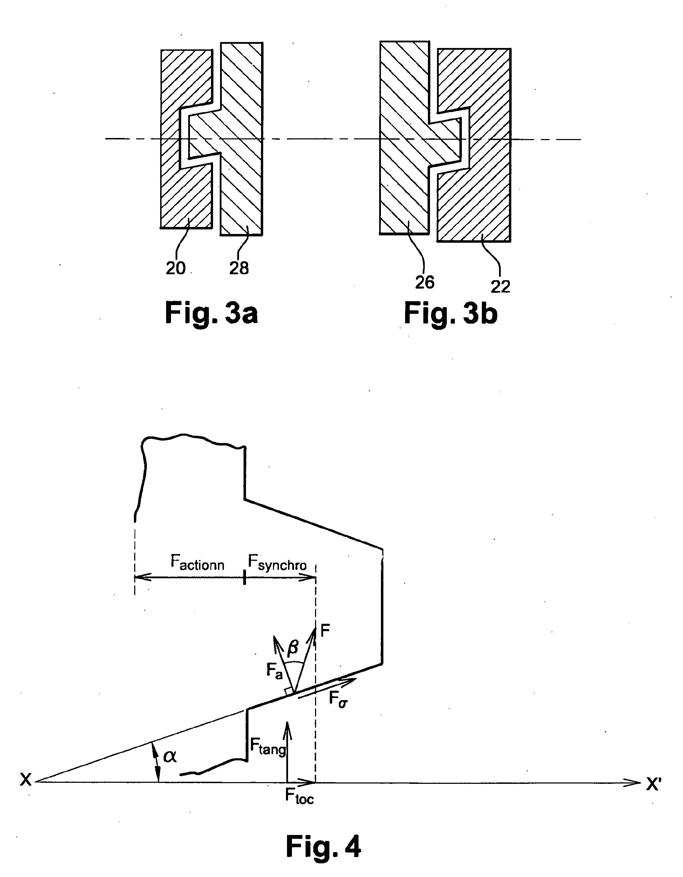

La figure 4 représente schématiquement les forces qui s'exercent au point de contact entre le flanc 40 d'un toc, par exemple un toc du cône $26_1$, et d'une cavité lorsque le dispositif 1 transmet un couple.. L'anneau conique subit deux forces de même direction mais de sens opposé, $F_{actionn}$ (exercée par l'actionneur via le manchon 24) et $F_{synchro}$ (exercée par l'anneau conique contigu $28_1$). Ces deux forces ne sont cependant pas d'intensité égale, la différence étant égale à l'intensité de la force $F_{toc}$ générée par les tocs. Si l'on observe maintenant les forces exercées au point de contact entre le toc et la cavité, le moyeu exerce en ce point une force F, que l'on peut décomposer en une force $F_a$ normale au plan de contact, et une force $F_a$ parallèle au plan de contact.. Cette force F peut être également décomposée en une force $F_{tang}$, normale à l'axe XX', et la force $T_{toc}$ parallèle à l'axe XX'. L'intensité de la force $F_{tang}$ est proportionnelle au couple c transmis par le moyeu et au bras de levier, ou rayon moyen r. Si l'on se place dans des conditions théoriques à la limite du glissement entre le toc et la cavité, la force de frottement $F_\sigma$ est égale à $F_a.\tan \beta$, où $\beta = \arctan \mu$, $\mu$ étant le coefficient de frottement au niveau des faces en contact. On a également :

$$F_a = F.\cos \beta$$

$$F_\sigma = F.\sin \beta$$

Avec :

$$F_{tang} = c/r = F.\cos(\beta{-}\alpha)$$

$$F_{toc} = F.\sin(\beta{-}\alpha)$$

On a finalement :

$$F_{synchro} = F_{actionn} - F_{toc} = F_{actionn} - F.\sin(\beta{-}\alpha)$$

On voit donc que la composante axiale due aux tocs est fonction de la différence $(\beta{-}\alpha)$ soit $(\arctan \mu - \alpha)$. Selon l'invention, ce terme doit être négatif mais aussi proche de zéro que possible. En effet, le but est de réduire au maximum la force axiale s'opposant à l'effort axial imposé par le manchon 24, mais cette force ne doit surtout pas s'ajouter à l'effort axial (ce qui serait le cas si $\alpha > \beta$), car alors le dispositif de couplage serait auto-assisté, et la moindre impulsion fournie par le manchon 24 aboutirait à un serrage supplémentaire du dispositif. De préférence, cette force axiale de retenue ne doit pas être nulle non plus, c'est-à-dire que $\alpha$ est strictement inférieur à $\beta$, tout en étant le plus proche possible de $\beta$.

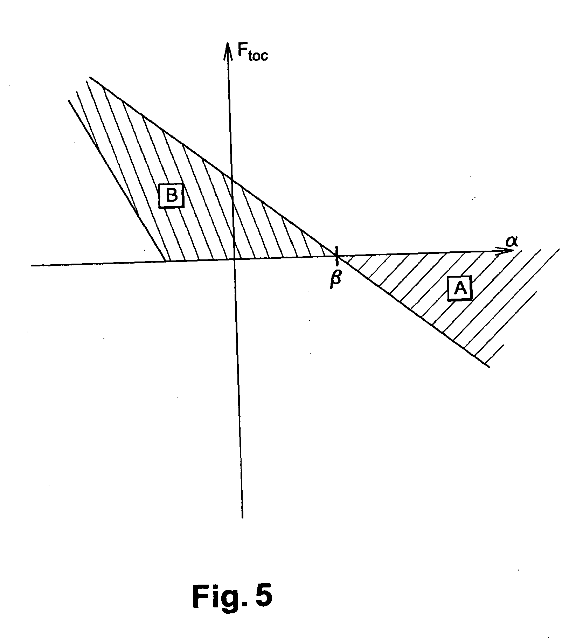

La figure 5 représente la variation de la force $F_{toc}$ en fonction de la valeur de l'angle $\alpha$. Cette variation est linéaire et la force $F_{toc}$ atteint logiquement la valeur zéro lorsque $\alpha = \beta$. Cette représentation permet de distinguer deux domaines selon que $\alpha$ soit inférieur ou supérieur à $\beta$, correspondant respectivement à une perte d'efficacité de la force d'actionnement (domaine B) et à l'auto-assistance (domaine A). Comme expliqué ci-dessus, la valeur de $\alpha$ doit permettre de ne pas générer d'auto-assistance (donc de ne pas être dans le domaine A), tout en minimisant la perte d'efficacité.

La figure 2a montre un anneau conique 28 coopérant avec le pignon fou 20. On remarque que, l'angle $\alpha$ étant défini par rapport au sens du glissement du toc par rapport à la cavité du moyeu ou du pignon fou, la forme du toc 30 est, contrairement à la figure 2b, de forme évasée. Ainsi, le toc 30 présente également un profil trapézoïdal d'angle $\alpha$, avec $\alpha<\beta$, mais c'est la base de ce trapèze qui coopère avec la cavité 36 du pignon fou (et non plus le sommet comme pour le moyeu). Comme on peut le voir sur la figure 2a, il est nécessaire que la cavité 36 présente une ouverture compatible avec la largeur du toc 30, en particulier pour permettre un assemblage simple du dispositif 1.

Les figures 3a et 3b présente une variante de réalisation des tocs des figures 2a et 2b. Cette variante part de la constatation que le dispositif transmet toujours un couple dans le même sens, ce qui fait que les flancs des tocs et des cavités en contact lorsque le dispositif 1 transmet du couple sont toujours les mêmes, les flancs opposés n'étant pas en contact. Ainsi, la condition concernant l'angle d'inclinaison des flancs des tocs ne s'appliquent impérativement qu'aux flancs en contact. La variante de réalisation des figures 3a et 3b propose donc de réaliser des tocs à flancs parallèles mais inclinés selon l'invention par rapport à l'axe XX'. Cette variante permet de réaliser des tocs plus compacts, simplifiant l'assemblage du dispositif 1, et simplifiant également la fabrication de l'ensemble des pièces, la forme des tocs et des cavités associés étant standard.

**Revendications**

1. Dispositif (1) de couplage par friction d'un pignon fou (20) avec un arbre (10) de boîte de vitesses comportant un moyeu (22) solidaire en rotation de cet arbre d'axe (XX'), un manchon (24) libre de glisser axialement par rapport au moyeu (22), des anneaux coniques ($26_1$, $26_2$, $26_3$, $28_1$, $28_2$) disposés de manière concentrique entre le moyeu (22) pignon fou (20), les anneaux coniques étant alternativement liés en rotation au moyeu (22) et au pignon fou (20) au moyen de tocs d'entraînement (30, 32) coopérant avec des cavités (34, 36) complémentaires présentes sur le moyeu (22) et le pignon fou (20), les anneaux coniques ($26_1$, $26_2$, $26_3$, $28_1$, $28_2$) étant aptes à être mis en contact sous l'action d'un effort axial de commande exercé par le manchon (24), de façon à transmettre par friction au pignon fou (20) un couple de rotation reçu du moyeu (22), le dispositif (1) étant **caractérisé en ce que** le flanc de chaque toc (30, 32) en contact avec le flanc en vis-à-vis de la cavité lors de la transmission de couple est incliné

d'un angle $\alpha$ non nul par rapport à la direction de l'axe (XX'), cet angle $\alpha$ étant tel que la tangente de cet angle est strictement inférieure à la valeur du coefficient de frottement ($\mu$) entre les surfaces des flancs du toc (30, 32) et de la cavité (34, 36).

2. Dispositif selon la revendication 1, dans lequel les cavités (34, 36) coopérant avec les tocs (30, 32) présente un profil complémentaire, leurs flancs en contact avec les tocs (30, 32) étant également inclinés d'un angle sensiblement égal à $\alpha$.

3. Dispositif selon la revendication 1 ou 2, dans lequel les tocs (30, 32) présentent un profil symétrique par rapport à l'axe (XX'), notamment un profil trapézoïdal.

4. Dispositif selon la revendication 3, dans lequel les tocs (30) liés en rotation au pignon fou (20) présente un profil évasé.

5. Dispositif selon la revendication 1 ou 2, dans lequel les tocs (30, 32) présentent deux flancs parallèles, inclinés respectivement d'un angle $\alpha$ et d'un angle (- $\alpha$).

6. Dispositif selon l'une des revendications précédentes, dans lequel la valeur de $\alpha$ est telle que sa tangente est proche de $\mu$.

7. Dispositif selon l'une des revendications précédentes, dans lequel les tocs (30, 32) sont disposés à la périphérie des anneaux coniques ($26_1$, $26_2$, $26_3$, $28_1$, $28_2$), chaque anneau comportant plusieurs tocs (30, 32).

8. Dispositif selon l'une des revendications précédentes, comportant au total au moins cinq anneaux coniques ($26_1$, $26_2$, $26_3$, $28_1$, $28_2$).

**Claims**

1. Device (1) for the friction-coupling of an idling pinion (20) with a gearbox shaft (10) comprising a hub (22) that rotates as one with this shaft of axis (XX'), a sleeve (24) free to slide axially with respect to the hub (22), conical rings ($26_1$, $26_2$, $26_3$, $28_1$, $28_2$) arranged concentrically between the idling pinion (20) hub (22), the conical rings being associated for rotation with the hub (22) and with the idling pinion (20) alternately, but means of driving dogs (30, 32) calibrating with complementary cavities (34, 36) present on the hub (22) and the idling pinion (20), the conical rings ($26_1$, $26_2$, $26_3$, $28_1$, $28_2$) being able to brought into contact under the action of an axial control force applied by the sleeve (24) so as by friction to transmit to the idling pinion (20) a rotational torque received from the hub (22), the device (1) being **characterized in that** the flank of each dog (30, 32) in contact with the opposing flank of the cavity during transmission of torque is inclined by a non-zero angle $\alpha$ with respect to the direction of the axis (XX'), this angle $\alpha$ being such that the tangent of this angle is strictly smaller than the value of the coefficient of friction ($\mu$) between the surfaces of the flanks of the dog (30, 32) and of the cavity (34, 36).

2. Device according to Claim 1, in which the cavities (34, 36) collaborating with the dogs (30, 32) has a complementary profile, their flanks in contact with the dogs (30, 32) being likewise inclined by an angle substantially equal to $\alpha$.

3. Device according to Claim 1 or 2, in which the dogs (30, 32) have a profile that is symmetric with respect to the axis (XX'), particularly a trapezoidal profile.

4. Device according to Claim 3, in which the dogs (30) that rotate as one with the idling pinion (20) have a flared profile.

5. Device according to Claim 1 or 2, in which the dogs (30, 32) have two parallel flanks inclined by an angle on and an angle (-$\alpha$) respectively.

6. Device according to one of the preceding claims, in which the value of $\alpha$ is such that its tangent is close to $\mu$.

7. Device according to one of the preceding claims, in which the dogs (30, 32) are arranged at the periphery of the conical rings ($26_1$, $26_2$, $26_3$, $28_1$, $28_2$), each ring comprising several dogs (30, 32).

8. Device according to one of the preceding claims, comprising in total at least five conical rings ($26_1$, $26_2$, $26_3$, $28_1$, $28_2$) .

**Patentansprüche**

1. Vorrichtung (1) zur Reibungskopplung eines Freilauf-Zahnrads (20) mit einer Welle (10) eines Schaltgetriebes, die eine Nabe (22), die in Drehung fest mit dieser eine Achse (XX') aufweisenden Welle verbunden ist, eine Muffe (24), die bezüglich der Nabe (22) axial frei gleiten kann, und Kegelringe ($26_1$, $26_2$, $26_3$, $28_1$, $28_2$) aufweist, die konzentrisch zwischen der Nabe (22) und dem Freilauf-Zahnrad (20) angeordnet sind, wobei die Kegelringe abwechselnd mit der Nabe (22) und mit dem Freilauf-Zahnrad (20) durch Mitnehmer (30, 32) in Drehung verbunden sind, die mit auf der Nabe (22) und dem Freilauf-Zahnrad (20) vorhandenen komplementären Hohlräumen (34, 36) zusammenwirken, wobei die Kegelringe ($26_1$, $26_2$, $26_3$, $28_1$, $28_2$) unter der Einwirkung einer von der Muffe (24) ausgeübten axialen Steuerkraft in Kontakt gebracht werden können, um durch Reibung ein von der Nabe (22) empfangenes Drehmoment an das Freilauf-Zahnrad (20) zu übertragen, wobei die Vorrichtung (1) **dadurch gekennzeichnet ist, dass** die Flanke jedes Mitnehmers (30, 32) in Kontakt mit der gegenüberliegenden Flanke des Hohlraums bei der Moment-übertragung um einen Winkel $\alpha$ ungleich Null bezüglich der Richtung der Achse (XX') geneigt ist, wobei dieser Winkel $\alpha$ so ist, dass die Tangente dieses Winkels strikt unter dem Wert des Reibungskoeffizienten (p) zwischen den Flächen der Flanken des Mitnehmers (30, 32) und des Hohlraums (34, 36) liegt.

2. Vorrichtung nach Anspruch 1, bei der die mit den Mitnehmern (30, 32) zusammenwirkenden Hohlräume (34, 36) ein komplementäres Profil haben, wobei ihre Flanken in Kontakt mit den Mitnehmern (30, 32) ebenfalls um einen Winkel im Wesentlichen gleich $\alpha$ geneigt sind.

3. Vorrichtung nach Anspruch 1 oder 2, bei der die Mitnehmer (30, 32) ein bezüglich der Achse (XX') symmetrisches, insbesondere ein trapezförmiges Profil haben.

4. Vorrichtung nach Anspruch 3, bei der die in Drehung mit dem Freilauf-Zahnrad (20) verbundenen Mitnehmer (30) ein ausgeweitetes Profil haben.

5. Vorrichtung nach Anspruch 1 oder 2, bei der die Mitnehmer (30, 32) zwei parallele Flanken haben, die um einen Winkel $\alpha$, bzw. um einen Winkel ($-\alpha$) geneigt sind.

6. Vorrichtung nach einem der vorhergehenden Ansprüche, bei der der Wert von $\alpha$ so ist, dass seine Tangente nahe $\mu$ ist.

7. Vorrichtung nach einem der vorhergehenden Ansprüche, bei der die Mitnehmer (30, 32) am Umfang der Kegelringe ($26_1$, $26_2$, $26_3$, $28_1$, $28_2$) angeordnet sind, wobei jeder Ring mehrere Mitnehmer (30, 32) aufweist.

8. Vorrichtung nach einem der vorhergehenden Ansprüche, die insgesamt mindestens fünf Kegelringe ($26_1$, $26_2$, $26_3$, $28_1$, $28_2$) aufweist.

**Fig. 1**

**Fig. 2a**          **Fig. 2b**

**Fig. 3a**  **Fig. 3b**

**Fig. 4**

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2846061

- JP 08200396 B